# EUROPEAN PATENT APPLICATION

(11) **EP 4 579 833 A1**
(43) Date of publication of application: **02.07.2025**
(21) Application number: 24866646.3
(22) Date of filing: 07.10.2024
(51) Int. Cl.: H01M 10/04, H01M 10/0562, H01M 10/052

(54) **BATTERY CELL FOR SECONDARY BATTERY**

(30) Priority: 30.10.2023 KR 20230146550; 09.09.2024 KR 20240122509
(71) Applicant: LG Energy Solution Ltd., 07335 Seoul (KR)
(72) Inventor: AHN, Sanghyeok, Daejeon 34122 (KR); WOO, Seunghe, Daejeon 34122 (KR); KIM, Jeonggil, Daejeon 34122 (KR); CHOI, Lak Young, Daejeon 34122 (KR); LEE, Jaegil, Daejeon 34122 (KR); LEE, Gyeongseop, Daejeon 34122 (KR)
(74) Representative: Goddar, Heinz J.
(86) International application number: PCT/KR2024/015166
(87) International publication number: WO 2025/095379

(57) **Abstract**

The present invention relates to a battery for a secondary battery, and more particularly to a battery for a secondary battery comprising a compression pad inside a case.

## Description

### [Technical Field]

This application claims the benefit of priority to Korean Patent Application No. 10-2023-0146550, filed October 30, 2023, and Korean Patent Application No. 10-2024-0122509, filed September 9, 2024, the disclosures of which are incorporated herein by reference in their entirety.

The present invention relates to a battery cell for a secondary battery, and more particularly to a battery cell for a secondary battery comprising a compression pad inside the case.

### [Related Art]

As the technology development and the demand for mobile devices increase, rechargeable secondary batteries are being used extensively as an energy source for a variety of mobile devices. Secondary batteries are also gaining attention as an energy source for electric and hybrid vehicles, which are being proposed as a way to solve air pollution from conventional gasoline and diesel vehicles.

Secondary batteries are categorized into coin-type batteries, cylindrical-type batteries, angular-type batteries, and pouch-type batteries based on the shape of the battery case. Among them, pouch-type batteries are attracting a lot of attention because they use a pouch exterior material consisting of a metal layer (foil) and a multilayer film of synthetic resin coated on the upper and lower surfaces of the metal layer to form the exterior, which can significantly reduce the weight of the battery compared to cylindrical or angular-type batteries using a metal can, making it possible to reduce the weight of the battery, and they have the advantage of being able to change into various shapes.

Pouch-type batteries are typically manufactured by a process that activates the battery cell after the battery assembly process. The activation process typically involves pressurizing the battery cell with a jig and applying a current to the battery cell to charge and discharge it to a predetermined voltage.

In the manufacture of a pouch-type battery, it is important that the battery cell is applied with uniform pressure during the pressurization of the battery cell during the cell assembly process. However, when charging and discharging the battery cell, due to the volume change of the active material, the contact between the solid particles is not maintained, resulting in uneven pressure on the battery cell, which degrades the cell life performance and affects the battery performance.

Therefore, it is necessary to develop a battery cell for uniform pressure application to the battery cell to realize good performance of all-solid-state batteries.

### [Prior art]

(Patent Reference 1) Korean Patent Laid-open Publication No. 10-2022-0052032 (April 27, 2022)

### [Detailed Description of the Invention]

### [Technical Problem]

One of the objectives of the present invention is to provide a battery cell that, in the manufacture of a battery, is subjected to uniform pressure during charging and discharging.

Another object of the present invention is to provide a battery cell that absorbs the volume change of the electrodes when pressurizing the battery cell, thereby suppressing the volume change of the entire cell, resulting in a uniform pressure across the battery cell, thereby enhancing good battery life performance and charge/discharge cycles.

### [Technical Solution]

One example of the present invention provides a battery cell for a secondary battery comprising an electrode assembly having a negative electrode current collector, a negative electrode, an electrolyte, a positive electrode, and a positive electrode current collector inside a case, and a first compression pad and a second compression pad in contact with one outermost side of the electrode assembly.

One example of the present invention provides a battery cell for a secondary battery, wherein the first compression pad and the second compression pad are disposed inside a case.

One example of the present invention provides a battery cell for a secondary battery, wherein the first compression pad is in contact with one side of the positive electrode current collector and is disposed between the positive electrode current collector and one side of the case.

One example of the present invention provides a battery cell for a secondary battery, wherein the second compression pad is in contact with one side of the negative electrode current collector and is disposed between the negative electrode current collector and one side of the case.

One example of the present invention provides a battery cell for a secondary battery, wherein the first compression pad and the second compression pad have a modulus of elasticity of 0.1 GPa to 3.0 GPa.

One example of the present invention provides a battery cell for a secondary battery, wherein the first compression pad and the second compression pad have a thickness of 0.1 mm to 2.0 mm.

One example of the present invention provides a battery cell for a secondary battery, wherein the first compression pad and the second compression pad are made of an elastic material.

In one example of the present invention, there is provided a battery cell for a secondary battery, wherein the elastic material comprises at least one selected from the group consisting of polytetrafluoroethylene (PTFE), fluoroethylene propylene (FEP), polyvinylidene fluoride (PVDF), polyvinyl chloride (PVC), spandex, elastomer, polybutadiene, nitrile rubber, silicone rubber, ethylene-propylene-diene rubber, and ethylene vinyl acetate.

One example of the present invention provides a battery cell for a secondary battery, wherein the electrode assembly includes a first negative electrode current collector, a first negative electrode, a first electrolyte, a first positive electrode, a positive electrode current collector, a second positive electrode, a second electrolyte, a second negative electrode, and a second negative electrode current collector, wherein the first compression pad is disposed between one side of the first negative electrode current collector and one side of the case, and the second compression pad is disposed between one side of the second negative electrode current collector and one side of the case.

One example of the present invention provides a battery cell for a secondary battery, wherein the first compression pad and the second compression pad have a modulus of elasticity of 1.0 GPa to 5.0 GPa.

One example of the present invention provides a battery cell for a secondary battery, wherein the first compression pad and the second compression pad have a thickness of 0.01 mm to 2.0 mm.

In one example of the present invention, a battery cell for a secondary battery is provided, wherein the first compression pad and the second compression pad have a thickness of 1/30 to 1/2 of the thickness of the battery cell.

In one example of the present invention, there is provided a battery cell for a secondary battery, wherein the battery cell comprises a plurality of electrode assemblies and further comprises an intermediate pad disposed between the electrode assemblies.

One example of the present invention provides a battery cell for a secondary battery, wherein the intermediate pad has a modulus of elasticity of 1.0 GPa to 3.0 GPa.

In one example of the present invention, a battery cell for a secondary battery is provided, wherein the intermediate pad has a thickness of 0.01 mm to 0.3 mm.

In one example of the present invention, a battery cell for a secondary battery is provided, wherein the intermediate pad has a thickness of 1/30 to 1/3 of the thickness of the battery cell.

One example of the present invention provides a battery cell for a secondary battery, wherein the electrolyte comprises a solid electrolyte.

One example of the present invention provides a battery cell for a secondary battery, wherein the solid electrolyte comprises a sulfide-based solid electrolyte, an oxide-based solid electrolyte, or a polymer-based solid electrolyte.

### [Advantageous Effects]

A battery cell according to the present invention can ensure that a uniform pressure is applied to the battery cell during charging and discharging.

The battery cell according to the present invention enables the manufacture of all-solid-state batteries with improved life performance.

A battery cell according to the present invention can improve charge and discharge cycle performance.

### [Brief Description of Drawing]

FIG. 1 is a diagram illustrating the structure of a battery cell for a secondary battery according to one example of the present invention.
FIG. 2 is a diagram illustrating the structure of a battery cell for a secondary battery according to another example of the present invention.
FIG. 3 is a diagrammatic illustration of the structure of a battery cell for a stack-type secondary battery according to another example of the present invention.
FIG. 4 is a diagram illustrating the capacity retention in accordance with charge/discharge rate (C-rate) for a battery cell according to Example 1 of the present invention and a battery cell according to Comparative Examples 2 and 4.
FIG. 5 is a diagram illustrating the capacity retention over cycles of a battery cell according to Example 1 of the present invention and a battery cell according to Comparative Examples 2 and 4.
FIG. 6 is a diagram illustrating the capacity retention in accordance with charge/discharge rate (C-rate) for a battery cell according to Example 2 of the present invention and a battery cell according to Comparative Examples 6 to 8.
FIG. 7 is a diagram illustrating the capacity retention over cycles of a battery cell according to Example 2 of the present invention and a battery cell according to Comparative Examples 6 to 8.
FIG. 8 is a diagram illustrating capacity retention in accordance with charge/discharge rate (C-rate) for a battery cell according to Examples 3 and 4 of the present invention, and a battery cell according to Comparative Examples 9 and 10.
FIG. 9 is a diagram illustrating the capacity retention over cycles of a battery cell according to Examples 3 and 4 of the present invention and a battery cell according to Comparative Examples 9 and 10.
FIG. 10 is a diagram illustrating the capacitance and Coulombic efficiency in accordance with cycle of a battery cell according to Example 5 of the present invention and a battery cell according to Comparative Examples 11 and 12.
FIG. 11 is a diagram illustrating the capacitance and Coulombic efficiency in accordance with cycle of a battery cell according to Example 5 of the present invention and a battery cell according to Comparative Examples 13 and 14.

### [Best Mode]

Examples of the present invention will now be described in detail with reference to the accompanying drawings. The drawings may exaggerate all or part of the configuration for illustrative purposes only.

It will also be apparent to those skilled in the art that the invention is not limited to what is shown in the accompanying drawings or described herein, and that the invention may be implemented in various forms without departing from the technical ideas of the invention.

In manufacturing a battery cell, contact between solid particles in the electrode composite layer is important for improving battery life performance and charge/discharge cycles, and pressurizing the battery cell at high pressure is necessary to ensure contact between solid particles in the electrode active material.

However, due to the volume change of the electrode active material during charging and discharging of the battery cell, the contact maintenance between the solid particles in the electrode active material deteriorates, resulting in volume changes throughout the cell, making it difficult to apply uniform pressure.

To solve this problem, the inventors of the present invention have developed a battery cell that absorbs the volume change of the electrodes during the pressurization process, thereby suppressing the volume change of the entire cell, resulting in a uniform pressure across the cell, which improves battery life performance and charge/discharge cycles.

Referring to the following drawings, the configuration of a battery cell for a secondary battery according to one example of the present invention will be described in detail.

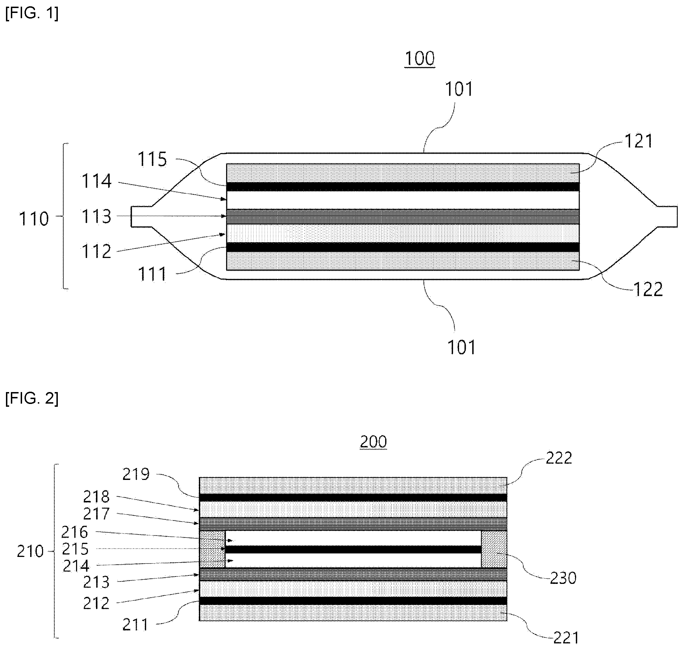

FIG. 1 is a schematic illustration of the structure of a battery cell (100) for a secondary battery, according to one example of the present invention.

Referring to FIG. 1, a battery cell (100) for a secondary battery may include an electrode assembly (110) having a negative electrode current collector (111), a negative electrode (112), an electrolyte (113), a positive electrode (114), and a positive electrode current collector (115) inside a case (101), and may include a first compression pad (121) contacting one side of the positive electrode current collector (115) and a second compression pad (122) contacting one side of the negative electrode current collector (111).

The first compression pad (121) and second compression pad (122) may be disposed at outermost edge of the electrode assembly (110).

The first compression pad (121) and the second compression pad (122) may be disposed inside the case (101).

The first compression pad (121) may be disposed between the positive electrode current collector (115) and one side of the case (101).

The second compression pad (122) may be disposed between the negative electrode current collector (111) and one side of the case (101).

Traditionally, when pressurizing a battery cell, a compression pad is placed on the outside of the case with the electrode assembly and then pressurized by a jig. However, if the compression pad is placed on the outside of the case as described above, when the battery cell is pressurized, the electrodes inside the case and the aluminum pouch come into direct contact, resulting in poor contact between the particles due to the volume change of the electrodes.

On the other hand, the battery cell (100) for a secondary battery according to one example of the present invention may comprise compression pads (121, 122) inside the case (101) and, in particular, by placing the compression pads (121, 122) between the electrodes (111, 115) inside the case (101) and the aluminum pouch (101), volume changes of the electrodes are absorbed to ensure uniform pressurization of the battery cell (100). Thereby, the battery cell (100) for a secondary battery can enhance contact between solid particles within the electrode composite layer, and can provide superior cell life performance and charge/discharge cycles.

According to one example of the present invention, the first compression pad (121) and the second compression pad (122) may have a modulus of elasticity of 0.1 GPa to 3.0 GPa. More specifically, the modulus of elasticity of the first compression pad (121) and the second compression pad (122) is at least 0.1 GPa, at least 0.2 GPa, at least 0.3 GPa, at least 0.4 GPa, at least 0.5 GPa, at least 0.6 GPa, at least 0.7 GPa, at least 0.8 GPa, at least 0.9 GPa, at least 1.0 GPa, 3.0 GPa or less, 2.9 GPa or less, 2.8 GPa or less, 2.7 GPa or less, 2.6 GPa or less, 2.5 GPa or less, 2.4 GPa or less, 2.3 GPa or less, 2.2 GPa or less, 2.1 GPa or less, or 2.0 GPa or less.

If the modulus of elasticity of the first compression pad (121) and the second compression pad (122) is less than 0.1 GPa or more than 3.0 GPa, there is a problem that the volume change of the electrode cannot be absorbed, resulting in a deterioration of the battery life.

According to one example of the present invention, the first compression pad (121) and the second compression pad (122) may be made of an elastic material. The elastic material may comprise at least one type selected from the group consisting of, but not limited to, polytetrafluoroethylene (PTFE), fluoroethylene propylene (FEP), polyvinylidene fluoride (PVDF), polyvinyl chloride (PVC), spandex, elastomer, polybutadiene, nitrile rubber, silicone rubber, ethylene-propylene-diene rubber, and ethylene vinyl acetate.

According to one example of the present invention, the thickness of the first compression pad (121) and the second compression pad (122) may be 0.1 mm to 2.0 mm. More specifically, the first compression pad (121) and the second compression pad (122) each have a thickness of 0.1 mm or more, 0.15 mm or more, 0.2 mm or more, 0.25 mm or more, 0.3 mm or more, 0.35 mm or more, 0.4 mm or more, 0.45 mm or more, 0.5 mm or more, 0.55 mm or more, 0.6 mm or more, 0.65 mm or more, 0.7 mm or more, 0.75 mm or more, 0.8 mm or more, 0.85 mm or more, 0.9 mm or more, 0.95 mm or more, 1.0 mm or more, 2.0 mm or less, 1.95 mm or less, 1.9 mm or less, 1.85 mm or less, 1.8 mm or less, 1.75 mm or less, 1.7 mm or less, 1.65 mm or less, 1.6 mm or less, 1.55 mm or less, 1.5 mm or less, 1.45 mm or less, 1.4 mm or less, 1.35 mm or less, 1.3 mm or less, 1.25 mm or less, 1.2 mm or less, 1.15 mm or less, 1.1 mm or less, 1.05 mm or less, or 1.0 mm or less.

According to one example of the present invention, the electrolyte may comprise a solid electrolyte. The solid electrolyte may comprise a sulfide-based solid electrolyte, an oxide-based solid electrolyte, or a polymer-based solid electrolyte. The solid electrolyte may be in the form of particles.

The sulfide-based solid electrolyte contains sulfur (S) and exhibits ionic conductivity of a metal belonging to Group 1 or 2 of the periodic table, and it may include a Li-P-S-based glass or a Li-P-S-based glass-ceramic.

Specifically, the sulfide-based solid electrolyte may include at least one selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂S₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably include at least one selected from the group consisting of Li₆PS₅Cl, Li₆PS₅Br and Li₆PS₅I. The Li₆PS₅Cl, Li₆PS₅Br and Li₆PS₅I may be argyrodite type solid electrolytes. Furthermore, the sulfide-based solid electrolyte may be doped with trace elements, for example, Li₆PS₅Cl additionally doped with bromine (Br).

The oxide-based solid electrolyte may comprise oxygen (O) and have the ionic conductivity of a metal belonging to Group 1 or 2 of the periodic table. For example, it may include at least one selected from LLTO-based compounds, Li₆La₂CaTa₂O₁₂, Li₆La₂ANb₂O₁₂ (wherein A is Ca or Sr), Li₂Nd₃TeSbO₁₂, Li₃BO_{2.5}N_{0.5}, Li₉SiAlO₈, LAGP-based compounds, LATP-based compounds, Li1₊ₓTi₂₋ₓAlₓSi_{y}(PO₄)_{3-y} (wherein 0≤x≤1, and 0≤y≤1), LiAlₓZr₂₋ₓ(PO₄)₃ (wherein 0≤x≤1, and 0≤y≤1), LiTiₓZr₂₋ₓ(PO₄)₃ (wherein 0≤x≤1, and 0≤y≤1), LISICON-based compounds, LIPON-based compounds, perovskite-based compounds, nasicon-based compounds, and LLZO-based compounds.

The polymer-based solid electrolyte is a composite of a lithium salt and a polymeric resin, that is, a polymeric electrolyte material in the form formed by the addition of a polymeric resin to a solvated lithium salt, and may exhibit an ionic conductivity of about 1x10⁻⁷ S/cm or more, preferably about 1x10⁻⁵ S/cm or more.

Non-limiting examples of the polymeric resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphate ester polymers, poly agitation lysines, polyester sulfides, polyvinyl alcohols, polyvinylidene fluorides, and polymers comprising ionic dissociating groups, and may include one or more thereof. Furthermore, the polymeric electrolyte may be a polymeric resin, for example, a branched copolymer, a comb-like polymer, and a cross-linked polymeric resin copolymerized with an amorphous polymer such as PMMA, polycarbonate, polysiloxane (PDMS), and/or phosphazene as a comonomer in a poly ethylene oxide (PEO) main chain, and may include one or more thereof.

In the electrolyte of the present invention, the lithium salt is an ionizable lithium salt, which can be expressed as Li⁺X⁻. The anions of the lithium salts are not specifically limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The battery cell (100) according to the present invention may include the first compression pad (121) and the second compression pad (122) of the present invention described above within the case (101) to absorb changes in the volume of the electrode, thereby improving poor contact between solid particles in the electrode active material and exhibiting superior battery performance.

The positive electrode (114) may have a structure in which a positive electrode composite layer containing a positive electrode active material is formed on the positive electrode current collector (115).

The positive electrode current collector (115) is not particularly limited as long as it is conductive without causing chemical changes in the battery, for example, stainless steel, aluminum, nickel, titanium, calcined carbon, aluminum or stainless steel whose surface is treated with carbon, nickel, titan or silver can be used.

Further, the positive electrode composite layer may comprise a positive electrode active material, a conductive material, a binder, and a solid electrolyte, and in some cases further comprise an additive.

Furthermore, the conductive material is not particularly limited, as long as it is conductive without causing chemical changes in the battery, but specifically, graphite, carbon-based materials, metal powders or metal fibers, acicular or branched conductive whiskers, conductive metal oxides, conductive polymers, and any one or mixtures thereof may be used. More specifically, graphite, such as natural or artificial graphite; carbon-based materials, such as carbon black, acetylene black, ketjen black, channel black, furnace black, lamp black, summer black, and carbon fiber; metal powders or metal fibers, such as copper, nickel, aluminum, and silver; Conductive whiskers, either acicular or branched, such as zinc oxide whisker, calcium carbonate whisker, titanium dioxide whisker, silicon oxide whisker, silicon carbide whisker, aluminum borate whisker, magnesium borate whisker, potassium titanate whisker, silicon nitride whisker, silicon carbide whisker, and alumina whisker; a conductive metal oxide, such as titanium oxide, or a conductive polymer, such as a polyphenylene derivative, or the like, any one of which or a mixture of two or more of which may be used.

Further, the binder for the positive electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as acrylonitrile styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene (PTFE), polyethylene, polypropylene, ethylene-propylene-diene terpolymer (EPDM), sulfonated EPDM, styrene-butadiene rubber, fluorinated rubber, and various copolymers.

Furthermore, the negative electrode (112) may have a structure in which a negative electrode composite layer containing a negative electrode active material is formed on the negative electrode current collector (111).

The negative electrode current collector (111) is not particularly limited as long as it has a high conductivity without causing chemical changes in the battery, and may include, for example, stainless steel, copper, nickel, titanium, calcined carbon, or stainless steel whose surface is treated with carbon, nickel, titanium, or silver.

The negative electrode composite layer may further comprise a negative electrode active material, a conductive material, a binder, and a solid electrolyte, and in some cases, an additive.

In this case, the negative electrode active material may be one selected from the group consisting of lithium metal, lithium alloy, lithium metal complex oxide, lithium-containing titanium complex oxide (LTO), and combinations thereof. Here, the lithium alloy can be an alloy comprising lithium and at least one metal selected from Na, K, Rb, Cs, Fr, Be, Mg, Ca, Sr, Ba, Ra, Al, and Sn. Further, the lithium metal complex oxide may be any one metal (Me) oxide (MeOx) selected from the group consisting of lithium and Si, Sn, Zn, Mg, Cd, Ce, Ni, and Fe, and may be, for example, LiₓFe₂O₃ (wherein 0<x≤1) or LiₓWO₂ (wherein 0<x≤1).

In addition, the negative electrode active material may be a metal complex oxide such as SnₓMe₁₋ₓMe'_{y}O_{z} (wherein Me is Mn, Fe, Pb, or Ge; Me' is Al, B, P, Si, elements of Group 1, 2 or 3 of the periodic table, or halogen; 0<x≤1; 1≤y≤3; and 1≤z≤8); oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅, and carbon-based negative electrode active materials such as crystalline carbon, amorphous carbon, or carbon composites can be used alone or in combination of two or more.

Furthermore, the conductive material may include, for example, nickel powder, cobalt oxide, titanium oxide, carbon, and the like. The carbon can be any one or more selected from the group consisting of ketjen black, acetylene black, furnace black, graphite, carbon fiber, and flourene.

Further, the binder for the negative electrode is any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP), or any one or a mixture of two or more selected from the group consisting of N,N-bis[3-(triethoxysilyl)propyl]urea, polyethylene oxide (PEO), poly(vinylidene fluoride) (PVDF), poly(vinylidene fluoride-co-hexafluoropropylene) (PVDF-co-HFP), conjugated diene rubber latexes such as styrene butadiene rubber (SBR), acrylonitrile butadiene rubber (NBR), methacrylate methyl butadiene rubber (MBR), or butadiene rubber (BR), carboxymethylcellulose (CMC), starch, hydroxypropylcellulose, regenerated cellulose, polyvinylpyrrolidone, polytetrafluoroethylene, polyethylene, polypropylene, ethylene-propylene-diene terpolymer (EPDM), sulfonated EPDM, styrene-butadiene rubber, fluorinated rubber, and various copolymers.

FIG. 2 is a diagram illustrating the structure of a battery cell (200) for a secondary battery according to another example of the present invention. In FIG. 2, the case is not illustrated separately for convenience, but it is not limited to being implemented without the case. In addition, in the example of FIG. 2, details overlapping with those explained in FIG. 1 are omitted, but it does not necessarily exclude them.

Referring to FIG. 2, the battery cell (200) for a secondary battery may be configured in the form of a bi cell. In this case, the bi cell can be a C-type bi cell.

A battery cell (200) for a secondary battery according to one example of the present invention may include an electrode assembly (210) having a first negative electrode current collector (211), a first positive electrode (212), a first electrolyte (213), a first positive electrode (214), a positive electrode current collector (215), a second positive electrode (216), a second electrolyte (217), a second negative electrode (218), and a second negative electrode current collector (219) inside the case.

In this case, the electrode assembly (210) may be manufactured as follows. In one example, the first negative electrode current collector (211), first negative electrode (212), and first electrolyte (213) are transferred to form a first assembly, and similarly, the second negative electrode current collector (219), second negative electrode (218), and second electrolyte (217) are transferred to form a second assembly identical to the first assembly, and then a frame (230) is placed between the first and second assemblies. The electrode assembly (210) can then be manufactured by joining each of the frames (230) to form a third assembly, and then placing the first positive electrode (214), the positive electrode current collector (215), and the second positive electrode (216) within the space configured by the frames (230) of the third assembly.

It can also include a first compression pad (221) in contact with one side of the first negative electrode current collector (211) and a second compression pad (122) in contact with one side of the second negative electrode current collector (219).

In one example, the first compression pad (221) and the second compression pad (222) may be disposed at outermost edge of the electrode assembly (200).

The first compression pad (221) and the second compression pad (222) may be disposed inside the case.

The first compression pad (221) may be disposed between one side of the first negative electrode current collector (211) and one side of the case.

The second compression pad (222) may be disposed between one side of the second negative electrode current collector (219) and one side of the case. According to one example of the present invention, the modulus of elasticity of the first compression pad (221) and the second compression pad (222) may be 1.0 GPa to 5.0 GPa. More specifically, the modulus of elasticity of the first compression pad (221) and the second compression pad (222) may be 1.0 GPa or greater, 1.1 GPa or greater, 1.2 GPa or greater, 1.3 GPa or greater, 1.4 GPa or greater, 1.5 GPa or greater, 1.6 GPa or greater, 1.7 GPa or greater, 1.8 GPa or more, 1.9 GPa or more, 2.0 GPa or more, or 5.0 GPa or less, 4.9 GPa or less, 4.8 GPa or less, 4.7 GPa or less, 4.6 GPa or less, 4.5 GPa or less, 4.4 GPa or less, 4.3 GPa or less, 4.2 GPa or less, 4.1 GPa or less, or 4.0 GPa or less. Preferably, the first compression pad (221) and the second compression pad (222) may have a modulus of elasticity of at least 1.0 GPa and 3.0 GPa or less.

According to one example of the present invention, the thickness of the first compression pad (221) and the second compression pad (222) may be 0.01 mm to 2.0 mm. More specifically, the thickness of the first compression pad (221) and the second compression pad (222) may be 0.01 mm or more, 0.02 mm or more, 0.03 mm or more, 0.04 mm or more, 0.05 mm or more, 0.06 mm or more, 0.07 mm or more, 0.08 mm or more, 0.09 mm or more, 0.1 mm or more, 0.15 mm or more, 0.2 mm or more, 0.25 mm or more, 0.3 mm or more, 0.35 mm or more, 0.4 mm or more, 0.45 mm or more, 0.5 mm or more, 0.55 mm or more, 0.6 mm or more, 0.65 mm or more, 0.7 mm or more, 0.75 mm or more, 0.8 mm or more, 0.85 mm or more, 0.9 mm or more, 0.95 mm or more, 1.0 mm or more, 2.0 mm or less, 1.95 mm or less, 1.9 mm or less, 1.85 mm or less, 1.8 mm or less, 1.75 mm or less, 1.7 mm or less, 1.65 mm or less, 1.6 mm or less, 1.55 mm or less, 1.5 mm or less, 1.45 mm or less, 1.4 mm or less, 1.35 mm or less, 1.3 mm or less, 1.25 mm or less, 1.2 mm or less, 1.15 mm or less, 1.1 mm or less, 1.05 mm or less, or 1.0 mm or less.

Alternatively, according to one example of the present invention, the thickness of the first compression pad (221) and the second compression pad (222) may have a ratio of 1/30 to 1/2 of the thickness of the battery cell (200). More specifically, the thickness of the first compression pad (221) and the second compression pad (222) may be 1/30 or more, 1/25 or more, 1/20 or more, 1/15 or more, 1/10 or more, 1/5 or more, 1/4 or more, 1/3 or more, 1/2 or less, respectively, of the thickness of the battery cell (200).

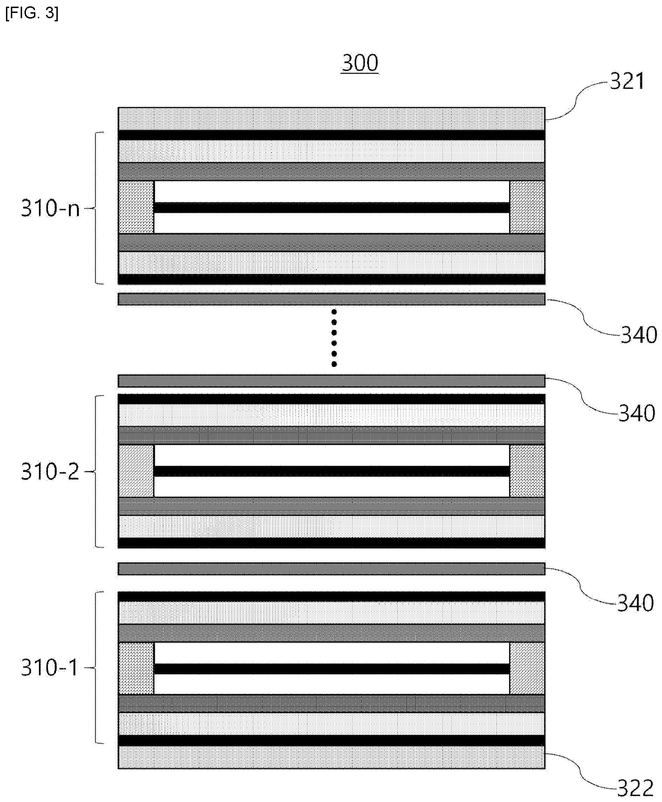

FIG. 3 is a diagrammatic illustration of the structure of a battery cell (300) for a stack-type secondary battery, according to another example of the present invention. The case is not shown separately in FIG. 3, but it is not omitted in the implementation. In addition, in the example of FIG. 3, details overlapping with those explained in FIG. 1 or 2 are omitted, but it does not necessarily exclude them.

Referring to FIG. 3, one example of the present invention may comprise a plurality of electrode assemblies (310-1 to 310-n) organized in a stack, and may further comprise an intermediate pads (340) disposed between the plurality of electrode assemblies (310-1 to 310-n). In this case, the configuration of the individual electrode assemblies (310-1 to 310-n) may comprise a first negative electrode current collector, a first negative electrode, a first electrolyte, a first positive electrode, a positive electrode current collector, a second positive electrode, a second electrolyte, a second negative electrode, and a second negative electrode current collector, as described in FIG. 2. Meanwhile, while FIG. 3 shows the intermediate pads (340) as separate from each electrode assembly (310-1 to 310-n) for convenience, they are actually implemented to be in contact with each other during the stacking process.

In one example, FIG. 3 illustrates a stack of at least four electrode assemblies (310-1 to 310-n), wherein each electrode assembly (310-1 to 310-n) includes at least three intermediate pads (340) between them. First and second compression pads (321, 322) may be disposed at outermost edge of the battery cell (300).

According to one example of the present invention, the modulus of elasticity of the intermediate pad (340) may be 1.0 GPa to 3.0 GPa. More specifically, the modulus of elasticity of the intermediate pad (340) may be 1.0 GPa or greater, 1.1 GPa or greater, 1.2 GPa or greater, 1.3 GPa or greater, 1.4 GPa or greater, 1.5 GPa or greater, 1.6 GPa or greater, 1.7 GPa or greater, 1.8 GPa or greater, 1.9 GPa or greater, 2.0 GPa or greater, or 3.0 GPa or less, 2.9 GPa or less, 2.8 GPa or less, 2.7 GPa or less, 2.6 GPa or less, 2.5 GPa or less, 2.4 GPa or less, 2.3 GPa or less, 2.2 GPa or less, 2.1 GPa or less, or 2.0 GPa or less.

Further, according to one example of the present invention, the intermediate pad (340) may have a thickness of 0.01 mm to 0.3 mm. More specifically, the thickness of the intermediate pad (340) can be 0.01 mm or more, 0.02 mm or more, 0.03 mm or more, 0.04 mm or more, 0.05 mm or more, 0.06 mm or more, 0.07 mm or more, 0.08 mm or more, 0.09 mm or more, 0.1 mm or more, 0.3 mm or less, 0.29 mm or less, 0.28 mm or less, 0.27 mm or less, 0.26 mm or less, 0.25 mm or less, 0.24 mm or less, 0.23 mm or less, 0.22 mm or less, 0.21 mm or less, or 0.2 mm or less.

Alternatively, according to one example of the present invention, the thickness of the intermediate pad (340) may have a ratio of 1/30 to 1/3 of the thickness of the battery cell (300). More specifically, the thickness of the intermediate pad (340) can be 1/30 or more, 1/25 or more, 1/20 or more, 1/15 or more, 1/10 or more, 1/5 or more, 1/4 or more, 1/3 or less, respectively, of the thickness of the battery cell (300).

Meanwhile, the thickness and elastic modulus of the first compression pad (321) and the second compression pad (322) are as described in FIG. 2.

### [Mode for Practicing the Invention]

Hereinafter, the present invention will be described in more detail by examples and experimental examples.

However, the following examples and experimental examples are illustrative of the present invention, and the present invention is not limited to these examples.

### Example 1

As shown in FIG. 1, an electrode assembly was fabricated by sequentially stacking a negative electrode current collector, a negative electrode, a solid electrolyte, a positive electrode, and a positive electrode current collector. The electrode assembly was then pressurized to warm isostatic pressure (WIP).

From the sintered electrode assembly, a first compression pad and a second compression pad were attached to the outermost edge of the negative electrode current collector and positive electrode current collector, respectively, and sealed with a pouch to fabricate a battery cell.

### Example 2

As shown in FIG. 2, two assemblies were fabricated by transferring the negative electrode current collector, negative electrode, and solid electrolyte, and the frame was placed on the two assemblies and joined. The electrode assembly was fabricated by sequentially stacking the positive electrode, positive electrode current collector, and positive electrode in the interstitial space caused by the frame of the combined assembly.

The electrode assembly was then heated to a warm isostatic pressure, and the first and second compression pads were attached to the outermost edge of each negative electrode current collector in the sintered electrode assembly, respectively, and sealed with a pouch to fabricate a battery cell.

### Example 3

The battery cell was prepared by the same method as the method prepared in Example 2 above, except that the modulus of elasticity of the first and second compression pads was configured to be 1 GPa each.

### Example 4

The battery cell was prepared by the same method as the method prepared in Example 2 above, except that the modulus of elasticity of the first and second compression pads was configured to be 2 GPa each.

### Example 5

A plurality of electrode assemblies are configured in a stack as shown in FIG. 3, wherein the plurality of electrode assemblies are the same as in Example 2 of FIG. 2. An intermediate pad with a modulus of elasticity of 2 GPa and a thickness of 0.2 mm was placed between the plurality of electrode assemblies, and a first compression pad and a second compression pad with a modulus of elasticity of 3 GPa and a thickness of 0.3 mm were placed at the outermost edge of the battery cell.

### Comparative Example 1

The battery cell was prepared in the same manner as the method prepared in Example 1, except that a battery cell for a secondary battery was prepared that did not include both the first and second compression pads in the electrode assembly according to Example 1.

### Comparative Example 2

The battery cell was prepared in the same manner as the method prepared in Example 1, except that a battery cell was prepared by stacking the first compression pad at the outmost edge of the positive electrode current collector, and binding them in the electrode assembly according to Example 1.

### Comparative Example 3

The battery cell was prepared in the same manner as the method prepared in Example 1, except that a battery cell was prepared by stacking the second compression pad at the outmost edge of the negative electrode current collector, and binding them in the electrode assembly according to Example 1.

### Comparative Example 4

The battery cell was prepared in the same manner as the method prepared in Example 1, except that a first compression pad was placed on the outside of the pouch abutting the positive electrode current collector and a second compression pad was placed on the outside of the pouch abutting the negative electrode current collector in a battery cell comprising the electrode assembly according to Example 1.

### Comparative Example 5

The battery cell was prepared in the same manner as the method prepared in Example 2, except that a battery cell for a secondary battery was prepared that did not include both the first and second compression pads in the electrode assembly according to Example 2.

### Comparative Example 6

The battery cell was prepared in the same manner as the method prepared in Example 2, except that a battery cell was prepared by stacking the second compression pad at the outmost edge of the second negative electrode current collector, and binding them in the electrode assembly according to Example 2.

### Comparative Example 7:

The battery cell was prepared in the same manner as the method prepared in Example 2, except that a battery cell was prepared by stacking the first compression pad at the outmost edge of the first negative electrode current collector, and binding them in the electrode assembly according to Example 2.

### Comparative Example 8

The battery cell was prepared in the same manner as the method prepared in Example 2, except that a first compression pad was placed on the outside of the pouch abutting the first negative electrode current collector and a second compression pad was placed on the outside of the pouch abutting the second negative electrode current collector in a battery cell comprising the electrode assembly according to Example 2.

### Comparative Example 9

The battery cell was prepared by the same method as the method prepared in Example 2 above, except that the modulus of elasticity of the first and second compression pads was configured to be 3 GPa each.

### Comparative Example 10

The battery cell was prepared by the same method as the method prepared in Example 2 above, except that the modulus of elasticity of the first and second compression pads was configured to be 4 GPa each.

### Comparative Example 11

In a stack-type battery cell according to Example 5, an intermediate pad having a modulus of elasticity of 2 GPa and a thickness of 0.2 mm is disposed between a plurality of electrode assemblies, and a first compression pad and a second compression pad having a modulus of elasticity of 4 GPa and a thickness of 0.3 mm are disposed at the outermost edge of the stack cell.

### Comparative Example 12

In a stack-type battery cell according to Example 5, an intermediate pad having a modulus of elasticity of 2 GPa and a thickness of 0.2 mm is disposed between a plurality of electrode assemblies, and a first compression pad and a second compression pad having a modulus of elasticity of 5 GPa and a thickness of 0.3 mm are disposed at the outermost edge of the stack cell.

### Comparative Example 13

In a stack-type battery cell according to Example 5, an intermediate pad having a modulus of elasticity of 2 GPa and a thickness of 0.2 mm is disposed between a plurality of electrode assemblies, and a first compression pad and a second compression pad having a modulus of elasticity of 3 GPa and a thickness of 0.2 mm are disposed at the outermost edge of the stack cell.

### Comparative Example 14

In a stack-type battery cell according to Example 5, an intermediate pad having a modulus of elasticity of 2 GPa and a thickness of 0.2 mm is disposed between a plurality of electrode assemblies, and a first compression pad and a second compression pad having a modulus of elasticity of 3 GPa and a thickness of 0.4 mm are disposed at the outermost edge of the stack cell.

### Experimental Example 1: Evaluating battery performance 1

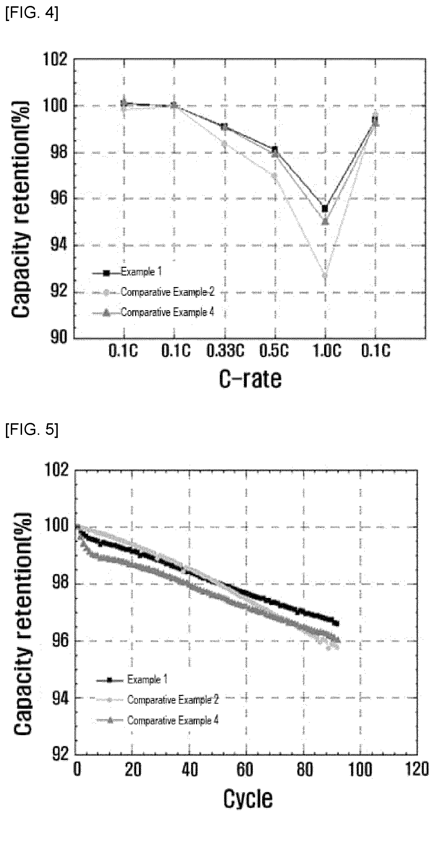

FIG. 4 is a diagram illustrating the capacity retention in accordance with charge/discharge rate (C-rate) for a battery cell according to Example 1 of the present invention and a battery cell according to Comparative Examples 2 and 4.

FIG. 5 is a diagram illustrating the capacity retention over cycles of a battery cell according to Example 1 of the present invention and a battery cell according to Comparative Examples 2 and 4.

Referring to FIGs. 4 and 5, it was found that the battery cell prepared by Example 1, which includes first and second compression pads at the outermost edge of the electrode assembly, respectively, has a superior charge/discharge rate and capacity retention over a plurality of cycles compared to the battery cell prepared by Comparative Example 2, which includes the first compression pad only at the outermost edge of the positive electrode current collector, or by Comparative Example 4, which includes the first and second compression pads on the outside of the cell abutting the positive electrode current collector and the negative electrode current collector.

In particular, at a C-rate of 1.0C, Example 1 was found to have a higher capacity retention rate of about 95.5%, while Comparative Example 2 had a capacity retention of about 95%, and Comparative Example 4 had a capacity retention of about 92.75%. Furthermore, at 92 cycles, Example 1 was found to have a higher capacity retention rate of about 96.75% as opposed to about 95.75% for Comparative Example 2 and about 96% for Comparative Example 4.

Although not shown in the drawings, the battery cell made by Comparative Example 1, which does not include compression pads inside and outside the cell, and the battery cell made by Comparative Example 3, which includes a second compression pad only at the outermost edge of the negative electrode current collector, shorted out early in the charging process and the experimental data could not be compared.

### Experimental Example 2: Evaluating battery performance 2

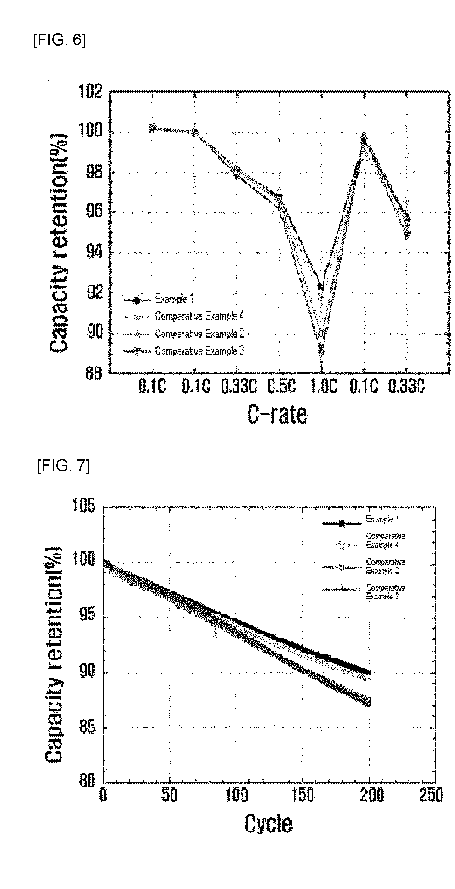

FIG. 6 is a diagram illustrating the capacity retention in accordance with charge/discharge rate (C-rate) for a battery cell according to Example 2 of the present invention and a battery cell according to Comparative Examples 6 to 8.

FIG. 7 is a diagram illustrating the capacity retention over cycles of a battery cell according to Example 2 of the present invention and a battery cell according to Comparative Examples 6 to 8.

Referring to FIGs. 6 and 7, it was found that the battery cell prepared by Example 2, which includes first and second compression pads at the outermost edge of the electrode assembly, respectively, has a superior charge/discharge rate and capacity retention over multiple cycles compared to the battery cell prepared by Comparative Example 6, which includes the second compression pad only at the outermost edge of the second negative electrode current collector, Comparative Example 7, which includes the first compression pad only at the outermost edge of the first negative electrode current collector, or Comparative Example 8, which includes the first and second compression pads on the outside of the cell abutting the first and second negative electrode current collectors.

In particular, at a C-rate of 1.0C, Example 2 was found to have a higher capacity retention rate of about 92.25% as compared to about 90% for Comparative Example 6, about 89% for Comparative Example 7, and about 91.75% for Comparative Example 8. Furthermore, at 200 cycles, Example 2 was found to have a higher capacity retention rate of about 90% as compared to about 87.5% for Comparative Example 6, about 87% for Comparative Example 7, and about 89% for Comparative Example 8.

Although not shown in the drawings, the battery cell manufactured by Comparative Example 5, which does not include compression pads inside and outside the cell, shorted out early in the charging process, making the experimental data incomparable.

### Experimental Example 3: Evaluating battery performance 3

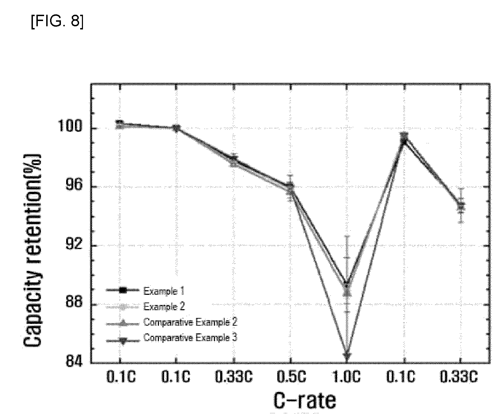

FIG. 8 is a diagram illustrating capacity retention in accordance with charge/discharge rate (C-rate) for a battery cell according to Examples 3 and 4 of the present invention, and a battery cell according to Comparative Examples 9 and 10.

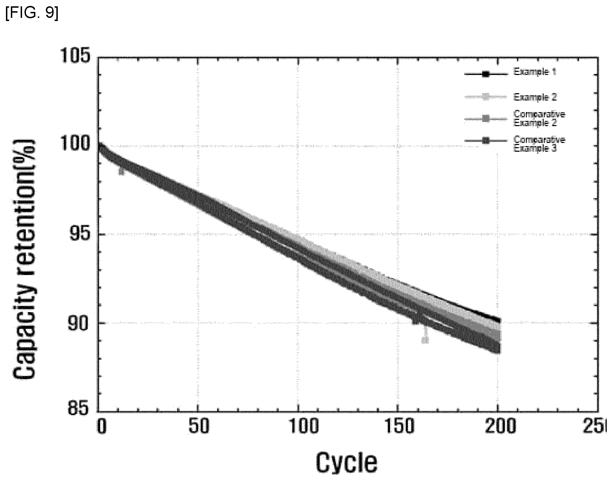

FIG. 9 is a diagram illustrating the capacity retention over cycles of a battery cell according to Examples 3 and 4 of the present invention and a battery cell according to Comparative Examples 9 and 10.

Referring to FIGs. 8 and 9, it was found that the battery cell prepared by Example 3, which includes first and second compression pads having a modulus of elasticity of 1 GPa at the outermost edge of the electrode assembly, respectively, has a superior charge/discharge rate and capacity retention over a plurality of cycles compared to the battery cell prepared by Example 4 having a modulus of elasticity of 2 GPa at the outermost edge of the electrode assembly, the battery cell prepared by Comparative Example 9 having a modulus of elasticity of 3 GPa at the outermost edge of the electrode assembly, or the battery cell prepared by Comparative Example 10 having a modulus of elasticity of 3 GPa at the outermost edge of the electrode assembly.

In particular, at a C-rate of 1.0C, Example 3 was found to have a higher capacity retention rate of about 89.5% as compared to about 89% for Example 4, about 89% for Comparative Example 9, and about 84.5% for Comparative Example 10, and at 200 cycles, Example 3 was found to have a higher capacity retention rate of about 90% as compared to about 89.5% for Example 4, about 89% for Comparative Example 9, and about 88.5% for Comparative Example 10.

This confirmed that if the modulus of elasticity of the first and second compression pads exceeds 3 GPa, the compression pads are likely to become excessively stiff and the uniformity of the drive pressure will be reduced. This confirmed that uneven pressure inside the battery cell increases the internal resistance of the battery cell, which in turn impedes ion transport and reduces the charging and discharging performance of the battery.

Although not shown in the drawings, the battery cell manufactured by Comparative Example 5, which does not include compression pads inside and outside the cell, shorted out early in the charging process, making the experimental data incomparable.

### Experimental Example 4: Evaluating battery performance 4 (Comparing cell performance by modulus of elasticity)

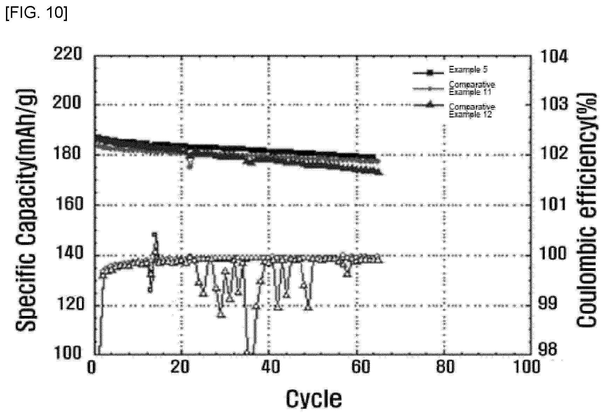

FIG. 10 is a diagram illustrating the capacitance and Coulombic efficiency in accordance with cycle of a battery cell according to Example 5 of the present invention and a battery cell according to Comparative Examples 11 and 12.

Referring to FIG. 10, the battery cell manufactured according to Example 5 includes an intermediate pad having the same thickness (0.2 mm) and modulus of elasticity (2 GPa) as the battery cell according to Comparative Examples 11 and 12. Further, Example 5 includes first and second compression pads of the same thickness (0.3 mm) as Comparative Examples 11 and 12. However, the modulus of elasticity of the first and second compression pads of Example 5, Comparative Example 11, and Comparative Example 12 are configured to be different.

Under these conditions, it is confirmed that the battery cell of Example 5 with a modulus of elasticity of 3 GPa has an equivalent or superior capacitance and Coulombic efficiency in accordance with the cycle of the battery cell compared to Comparative Examples 11 and 12 with a modulus of elasticity of 4 GPa or 5 GPa.

In particular, around 60 cycles, it was observed that Example 5 had a higher capacitance of about 180 mAh/g, as opposed to about 177 mAh/g for Comparative Example 11 and about 173 mAh/g for Comparative Example 12.

### Experimental Example 5: Evaluating battery performance 5 (Comparing cell performance by outermost pad thickness difference)

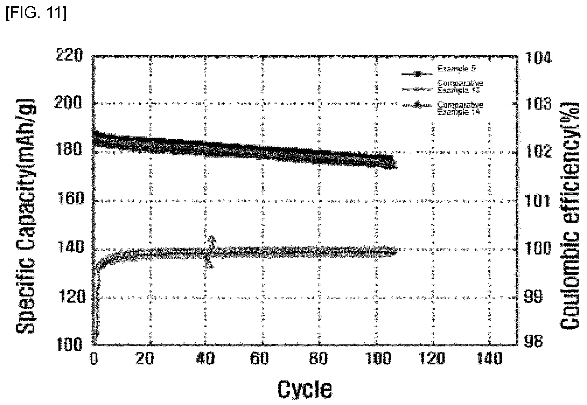

FIG. 11 is a diagram illustrating the capacitance and Coulombic efficiency in accordance with cycle of a battery cell according to Example 5 of the present invention and a battery cell according to Comparative Examples 13 and 14.

Referring to FIG. 11, the battery cell manufactured according to Example 5 includes an intermediate pad having the same thickness (0.2 mm) and modulus of elasticity (2 GPa) as the battery cell according to Comparative Examples 13 and 14. Further, Example 5 includes first and second compression pads of the same modulus of elasticity (3GPa) as Comparative Examples 14 and 15. However, the thicknesses of the first and second compression pads of Example 5, Comparative Example 13, and Comparative Example 14 are configured to be different.

Under these conditions, it is confirmed that the battery cell of Example 5 with a thickness of 0.3 mm for the first and second compression pads is equivalent or superior in capacitance and Coulombic efficiency in accordance with the cycle of the battery cell compared to Comparative Examples 14 and 15 with thicknesses of 0.2 mm or 0.4 mm.

In particular, around 100 cycles, Example 5 was found to have a higher capacitance of about 178 mAh/g, as opposed to about 176 mAh/g for Comparative Example 13 and about 174 mAh/g for Comparative Example 14.

Although the present invention has been described above by way of limited examples and drawings, the invention is not limited thereby, and various modifications and variations may be made by those having ordinary skill in the art, within the technical idea of the invention and the equivalent scope of the patent claims set forth below.

### [Reference Numerals]

- 100:: Secondary battery
- 101:: Case
- 110:: Electrode assembly
- 111:: Negative electrode current collector
- 112:: Negative electrode
- 113:: Electrolyte
- 114:: Positive electrode
- 115:: Positive electrode current collector
- 121:: First pad
- 122:: Second pad

## Claims

1. A battery cell for a secondary battery comprising an electrode assembly comprising a negative electrode current collector, a negative electrode, an electrolyte, a positive electrode, and a positive electrode current collector within a case, and
a first compression pad and a second compression pad in contact with one outermost side of the electrode assembly.

2. The battery cell for a secondary battery according to claim 1,
wherein the first compression pad and the second compression pad are disposed inside the case.

3. The battery cell for a secondary battery according to claim 1,
wherein the first compression pad is in contact with one side of the positive electrode current collector and is disposed between the positive electrode current collector and one side of the case.

4. The battery cell for a secondary battery according to claim 1,
wherein the second compression pad is in contact with one side of the negative electrode current collector and is disposed between the negative electrode current collector and one side of the case.

5. The battery cell for a secondary battery according to claim 1,
wherein the first compression pad and the second compression pad have an elastic modulus of between 0.1 GPa and 3.0 GPa.

6. The battery cell for a secondary battery according to claim 1,
wherein the first compression pad and the second compression pad have a thickness of between 0.1 mm and 2.0 mm.

7. The battery cell for a secondary battery according to claim 1,
wherein the first compression pad and the second compression pad are made of an elastic material.

8. The battery cell for a secondary battery according to claim 7, wherein the elastic material comprises at least one selected from the group consisting of polytetrafluoroethylene (PTFE), fluoroethylene propylene (FEP), polyvinylidene fluoride (PVDF), polyvinyl chloride (PVC), spandex, elastomer, polybutadiene, nitrile rubber, silicone rubber, ethylene-propylene-diene rubber, and ethylene vinyl acetate.

9. The battery cell for a secondary battery according to claim 1,
wherein the electrode assembly comprises a first negative electrode current collector, a first negative electrode, a first electrolyte, a first positive electrode, a positive electrode current collector, a second positive electrode, a second electrolyte, a second negative electrode, and a second negative electrode current collector,
wherein the first compression pad is disposed between one side of the first negative electrode current collector and one side of the case,
wherein the second compression pad is disposed between one side of the second negative electrode current collector and one side of the case.

10. The battery cell for a secondary battery according to claim 9,
wherein the first compression pad and the second compression pad have an elastic modulus of between 1.0 GPa and 5.0 GPa.

11. The battery cell for a secondary battery according to claim 9,
wherein the first compression pad and the second compression pad have a thickness of between 0.01 mm and 2.0 mm.

12. The battery cell for a secondary battery according to claim 9,
wherein the first compression pad and the second compression pad have a thickness of 1/30 to 1/2 of a thickness of the battery cell.

13. The battery cell for a secondary battery according to claim 9,
wherein the electrode assembly comprises a plurality of electrode assemblies,
and further comprises an intermediate pad disposed between the electrode assemblies.

14. The battery cell for a secondary battery according to claim 13,
wherein the intermediate pad has an elastic modulus of between 1.0 GPa and 3.0 GPa.

15. The battery cell for a secondary battery according to claim 13,
wherein the intermediate pad has a thickness of 0.01 mm to 0.3 mm.

16. The battery cell for a secondary battery according to claim 13,
wherein the thickness of the intermediate pad is 1/30 to 1/3 of the thickness of the battery cell.

17. The battery cell for a secondary battery according to claim 1,
wherein the electrolyte comprises a solid electrolyte.

18. The battery cell for a secondary battery according to claim 17,
wherein the solid electrolyte comprises a sulfide-based solid electrolyte, an oxide-based solid electrolyte, or a polymer-based solid electrolyte.
